# EUROPÄISCHE PATENTANMELDUNG

(11) **EP 1 238 928 A2**
(43) Veröffentlichungstag der Anmeldung: **11.09.2002**
(21) Anmeldenummer: 02450047.2
(22) Anmeldetag: 06.03.2002
(51) Int. Cl.: B65G 51/32

(54) **Rohrpoststation**

(30) Priorität: 06.03.2001 AT 34600001
(71) Anmelder: Sumetzberger, Gerhard Ing., 1110 Wien (AT)
(72) Erfinder: Sumetzberger, Gerhard Ing., 1110 Wien (AT)
(74) Vertreter: Müllner, Erwin, Dr.

(57) **Zusammenfassung**

Die Rohrpoststation hat einen zwischen zwei ortsfesten Platten (1,3) angeordneten ersten Rotor (7), der zwei Rohrabschnitte, nämlich einen Durchfahrtsrohrabschnitt (11) und einen Bremsrohrabschnitt (12), aufweist, und vorzugsweise auch einen zweiten Rotor (8), der unabhängig vom ersten Rotor (7) drehbar ist und einen Rohrabsohnitt (15) aufweist, der zur Frontbeladung eine seitliche Öffnung (16) aufweist. Die untere Platte (3) weist zwei Öffnungen (4,5) auf, die an ein Fahrrohr und an ein Auswurfrohr anschließbar sind. Erfindungsgemäß ist eine Verriegelungsvorrichtung (17) vorgesehen, durch die eine Rohrposthülse im Bremsrohrabschnitt (12) fixierbar ist. Die Verriegelungsvorrichtung (17) ist nur durch einen Schlüssel oder eine andere Identifizierung zu betätigen. Die Verriegelungsvorrichtung kann als bewegliche Verriegelungsplatte (17) ausgebildet sein, die zwischen den Rotoren (7,8) und der unteren Platte (3) angeordnet ist. Sie kann drehbar sein und eine nierenförmige Öffnung (18) aufweisen, die das Fahrrohr ständig, auch in Zwischenstellungen, freigibt. Sie kann aber auch linear verschiebbar sein.

## Beschreibung

Die vorliegende Erfindung betrifft eine Rohrpoststation mit einem zwischen zwei ortsfesten Platten angeordneten ersten Rotor, der zwei Rohrabschnitte, nämlich einen Durchfahrtsrohrabschnitt und einen Bremsrohrabschnitt, aufweist, wobei die untere Platte zwei Öffnungen aufweist, die an ein Fahrrohr und an ein Auswurfrohr anschließbar sind, wobei weiters eine bewegliche Verriegelungsplatte vorgesehen ist, die in mindestens zwei Positionen stellbar ist, wobei in einer Position eine Rohrposthülse im Bremsrohrabschnitt fixierbar ist, während die Öffnung für das Fahrrohr freigegeben ist.

Eine derartige Rohrpoststation ist aus der DE 3801558 A1 bekannt. Dort hat die Verriegelungsplatte eine Öffnung 21 für eine Hülse und eine Öffnung 22 für Luft (siehe Spalte 2, Zeilen 33 bis 34). Dies bedeutet, dass - wenn die Öffnung 21 dazu gebraucht wird, eine Hülse auszuschleusen - das Fahrrohr blockiert ist.

Eine ähnliche Rohrpoststation ist aus der AT 393 490 B bekannt. Dort ist allerdings keine Verriegelungsplatte vorgesehen. Dafür ist ein zweiter Rotor vorgesehen, der unabhängig vom ersten Rotor drehbar ist und einen Rohrabschnitt aufweist, der zur Frontbeladung eine seitliche Öffnung aufweist. Bei dieser Rohrpoststation kann durch die zwei unabhängig voneinander drehbaren Rotoren sowohl bei Empfangsstellung als auch bei Durchfahrtsstellung des ersten Rotors eine abzusendende Hülse in den zweiten Rotor eingestellt werden, sodass es zu keinen Wartezeiten für den Benutzer kommt. Der zweite Rotor ist sowohl an einer der beiden ortsfesten Platten (oder einem mit diesen fest verbundenen Element) als auch an dem ersten Rotor, beispielsweise durch je einen Elektromagnet, fixierbar. Auf diese Weise ist kein Antrieb für den zweiten Rotor notwendig. Soll der zweite Rotor gedreht werden, fixiert man ihn einfach am ersten Rotor und treibt diesen an. Soll jedoch der erste Rotor unabhängig vom zweiten Rotor gedreht werden, fixiert man den zweiten Rotor an einem ortsfesten Element, z.B. an einer der beiden ortsfesten Platten oder am Gehäuse.

Für Rohrpostanlagen in Spitälern für z.B. Medikamenten- und Drogentransport ist es wichtig, dass bestimmte Hülsen nicht sofort nach Empfang ausgeschleust werden, sondern dass diese codierten Hülsen in der Rohrpoststation zunächst gespeichert werden und erst nach erfolgter eindeutiger Identifizierung des Empfängers vom System freigegeben und aus der Rohrpoststation ausgeschleust werden. Falls die Hülse vom Empfänger innerhalb eines definierbaren Zeitraumes nicht aus der Rohrpoststation entnommen wird, soll diese an die Sender-Rohrpoststation zurückgesandt werden.

Dies könnte man mit der Rohrpoststation gemäß der AT 393 490 B zwar erreichen, indem man den ersten Rotor in der Empfangsstellung stehen lässt, bis sich der Empfänger identifiziert hat. In dieser Zeit kann aber keine andere Hülse die Rohrpoststation durchfahren, was natürlich ungünstig ist.

Gemäß der DE 3801558 A1 ist lediglich vorgesehen, eine Hülse kurzzeitig zu parken und dann entweder weiter zu befördern oder auszuschleusen. Eine "Entnahme bei Bedarf" ist nicht möglich, weil während der Entnahme keine Hülsen die Rohrpoststation durchfahren können. Der Zweck der Verriegelungsplatte ist es bei dieser Station auch nicht, eine Hülse zu verriegeln, sondern aus den beiden Rohrabschnitten, die beide als Durchfahrtsrohrabschnitte verwendet werden können, Bremsrohrabschnitte zu machen. Insofern ist die Bezeichnung "Verriegelungsplatte" für diese Rohrpoststation gar nicht passend.

Es ist daher Aufgabe der vorliegenden Erfindung, eine Rohrpoststation der eingangs genannten Art für Hülsenspeicherung (Pharmacy Funktion) geeignet zu machen, wobei es unabhängig davon, ob die Rohrpoststation gerade eine Hülse speichert oder nicht, möglich sein soll, dass weitere Hülsen durch die Rohrpoststation durchfahren können.

Diese Aufgabe wird bei einer Rohrpoststation der eingangs genannten Art erfindungsgemäß dadurch gelöst, dass in einer anderen Position der Verriegelungsplatte beide Öffnungen der unteren Platte freigegeben sind und dass die Verriegelungsplatte nur durch einen Schlüssel oder eine andere Identifikationseinrichtung in die andere Position stellbar ist. Durch die Verriegelungsvorrichtung kann erreicht werden, dass die Hülse im Bremsrohrabschnitt nicht sofort, wenn der Bremsrohrabschnitt mit der Auswurföffnung fluchtet, aus der Station herausfällt, sondern erst, wenn sie zusätzlich von der Verriegelungsvorrichtung freigegeben ist. Weil in einer Position der Verriegelungsvorrichtung eine Rohrposthülse im Bremsrohrabschnitt fixierbar ist, während die Öffnung für das Fahrrohr freigegeben ist, und weil in der anderen Position der Verriegelungsplatte beide Öffnungen der unteren Platte freigegeben sind, können immer Rohrposthülsen die Station durchfahren, egal ob eine Hülse gerade gespeichert ist oder gerade ausgeschleust wird.

Damit kann die Station sämtliche Funktionen (natürlich mit Ausnahme des Empfangs einer weiteren Hülse) ausüben, während eine empfangene Hülse in der Station gespeichert ist.

Die Verriegelungsplatte kann zwischen der unteren Platte und dem Rotor (also unmittelbar über der unteren Platte) angebracht sein, sie kann aber auch unter der unteren Platte vorgesehen werden.

Vorzugsweise ist - wie aus der AT 393 490 B bekannt - ein zweiter Rotor vorgesehen, der unabhängig vom ersten Rotor drehbar ist und einen Rohrabschnitt aufweist, der zur Frontbeladung eine seitliche Öffnung aufweist.

Es ist dadurch möglich, den zweiten Rotor mit einer Hülse zu beladen und eine Hülse im ersten Rotor zu speichern oder auszuschleusen. Ebenfalls ist es möglich, eine Hülse abzusenden, während eine Hülse gespeichert ist.

Es ist zweckmäßig, dass die Verriegelungsplatte drehbar ist und eine nierenförmige Öffnung aufweist, die das Fahrrohr ständig, auch in Zwischenstellungen, freigibt.

Würde man die drehbare Verriegelungsplatte mit einer kreisförmigen Öffnung versehen, könnte die Funktion des gleichzeitigen Durchfahrens und Auswerfens einer Hülse nicht erfüllt werden. Würde man diese Platte mit zwei Öffnungen, die mit denen der unteren ortsfesten Platte der Rohrpoststation fluchten, ausführen, wäre in dem Zeitraum, in dem die Verriegelungsplatte in Auswurfstellung dreht, das Durchfahren einer Hülse nicht möglich, da sie den Steg zwischen den zwei Öffnungen der Verriegelungsplatte treffen und zerstören könnte. Dadurch ergeben sich wieder lästige Wartezeiten und Verzögerungen in der Anlage. Es ist daher bevorzugt, die Verriegelungsplatte mit einer nierenförmigen Öffnung, die sich über die beiden Öffnungen der unteren ortsfesten Platte der Station erstreckt, zu versehen.

Bei dieser Ausführungsform ist es möglich, gleichzeitig eine gespeicherte Hülse auszuschleusen und Hülsen durch die Station durchfahren zu lassen.

Die Verriegelungsplatte kann auch linear verschiebbar sein, sodass sie durch eine lineare Bewegung die Auswurföffnung freigibt und verschließt. Hier muss jedoch mit einem erhöhten Platzbedarf gerechnet werden. Bei bestehenden Stationen kann diese Ausführungsform aber zweckmäßig sein, weil dieser zusätzliche Platz u.U. durch Abfräsen der unteren Platte geschaffen werden kann.

Der erste Rotor kann auf drei oder mehr Rohrabschnitte erweitert werden, wodurch das gleichzeitige Speichern mehrerer Hülsen ermöglicht wird.

Anhand der beiliegenden Zeichnungen wird die Erfindung näher erläutert. Die Fig.1 bis Fig.4 zeigen verschiedene Stellungen und zwei Ausführungsbeispiele der vorliegenden Erfindung, jeweils in perspektivischer Explosionsdarstellung, und zwar zeigt Fig.1 die Durchfahrtsstellung, Fig.2 die Empfangsstellung, Fig.3A die Speicherstellung mit Ausführungsbeispiel Drehplatte, Fig.3B die Auswurfstellung mit Ausführungsbeispiel Drehplatte, Fig.3C die Speicherstellung mit Ausführungsbeispiel Schiebeplatte, Fig.3D die Auswurfstellung mit Ausführungsbeispiel Schiebeplatte und Fig.4 die Sendestellung.

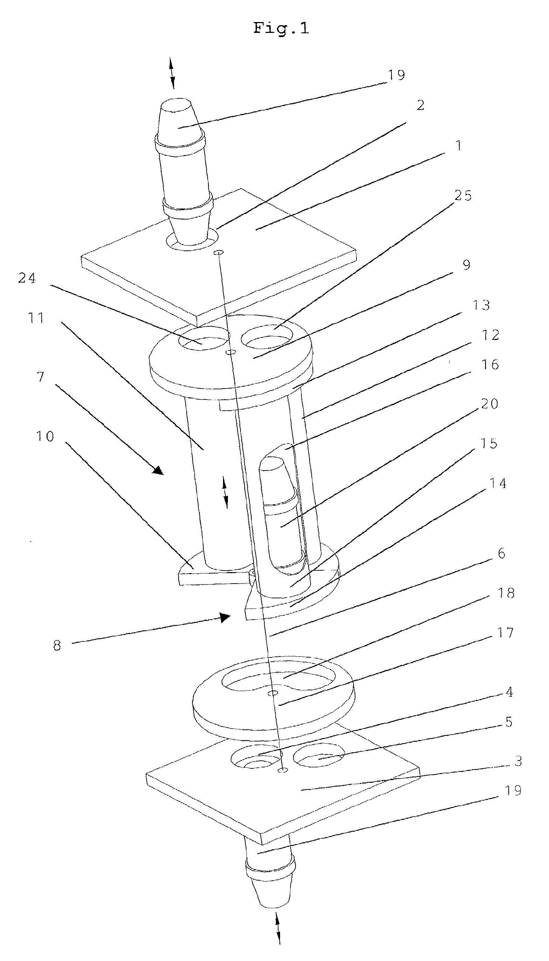

Die in den Fig.1 bis Fig.4 dargestellte Rohrpoststation weist eine obere ortsfeste Platte 1 und eine untere ortsfeste Platte 3 auf. Die obere Platte 1 weist eine Öffnung 2 auf, die zum Anschluss an ein Rohr (nicht dargestellt) der Rohrpostanlage bestimmt ist. Die untere Platte 3 weist zwei Öffnungen 4 und 5 auf, wobei eine der beiden Öffnungen, nämlich 4, genau unter der Öffnung 2 der oberen Platte 1 liegt und ebenfalls zum Anschluss an ein Rohr (nicht dargestellt) der Rohrpostanlage bestimmt ist. Die Öffnung 5 dient zur Ausgabe von empfangenen Hülsen; unter dieser Öffnung 5 wird zweckmäßigerweise ein Auffangbehälter (nicht dargestellt) angebracht.

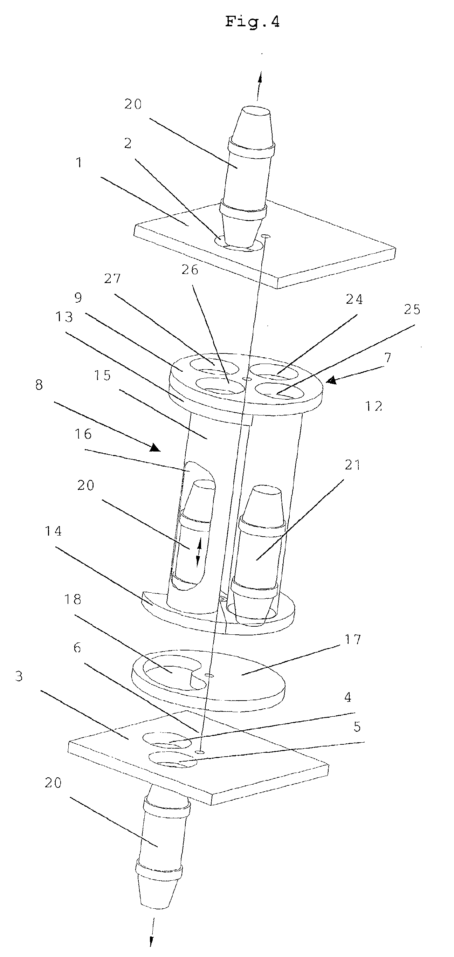

Zwischen diesen beiden Platten 1 und 3 ist ein erster Rotor 7 um eine Achse 6 drehbar angeordnet. Dieser Rotor 7 weist eine obere kreisförmige Drehplatte 9 und eine untere halbkreisförmige Drehplatte 10 auf. Die obere Drehplatte 9 weist zwei bis vier Öffnungen, nämlich 24, 25, 26 und 27, auf (die Öffnungen 26 und 27 sind nur in Fig.4 dargestellt). Die untere Drehplatte 10 weist 2 Öffnungen (nicht dargestellt) auf, die genau unter den Öffnungen 24 und 25 der oberen Drehplatte 9 liegen. Die Öffnungen 24, 25, 26 und 27 der oberen Drehplatte 9 sowie die Öffnungen der unteren Drehplatte 10 sind bezüglich der Drehachse 6 des ersten Rotors 7 um 90° zueinander versetzt. Auch die beiden Öffnungen 4 und 5 der unteren ortsfesten Platte 3 sind bezüglich der Drehachse 6 um 90° zueinander versetzt, sodass es eine Stellung des ersten Rotors 7 gibt, in der die Öffnungen der unteren Drehplatte 10 genau über den Öffnungen 4 und 5 der unteren ortsfesten Platte 3 liegen.

Die Öffnungen der beiden Drehplatten 9 und 10 sind durch zwei Rohrabschnitte, nämlich einen Durchfahrtsrohrabschnitt 11 und einen Bremsrohrabschnitt 12, miteinander verbunden.

Zum Antrieb des ersten Rotors 7 kann die obere Drehplatte 9 eine Verzahnung oder eine Nut (beide nicht dargestellt) aufweisen, in die ein Zahnrad oder ein Keilriemen eines nicht dargestellten Elektromotors eingreifen kann.

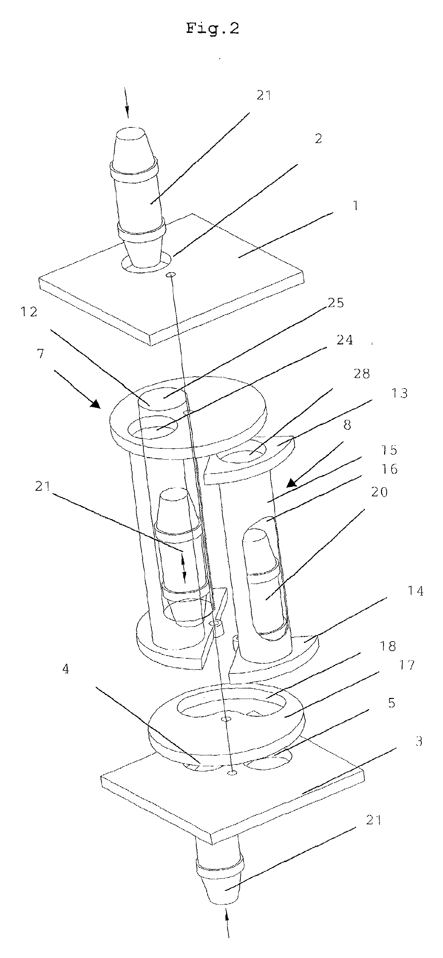

Zwischen den beiden ortsfesten Platten 1 und 3 befindet sich auch ein zweiter Rotor 8. Dieser Rotor 8 weist eine obere viertelkreisförmige Drehplatte 13 und eine untere viertelkreisförmige Drehplatte 14 auf. Der zweite Rotor 8 ist so wie der erste Rotor 7 um die Drehachse 6 drehbar gelagert. Die obere Drehplatte 13 weist eine Öffnung 28 (siehe Fig.2) auf, die genau über der Öffnung (nicht dargestellt) der unteren Drehplatte 14 angeordnet ist. Diese beiden Öffnungen sind durch einen Rohrabschnitt, nämlich den Einspeicherrohrabschnitt 15, miteinander verbunden. Dieser Einspeicherrohrabschnitt 15 weist eine seitliche Öffnung 16 auf, sodass eine Hülse 20 von vorne eingesetzt werden kann.

Zwischen der unteren ortsfesten Platte 3 und den beiden Rotoren 7 und 8 befindet sich eine bewegliche Platte, die Verriegelungsplatte. Diese Verriegelungsplatte kann, als eine um die Drehachse 6 drehbar gelagerte, kreisrunde Drehplatte 17, oder als eine in der unteren ortsfesten Platte 3 versenkte Schiebeplatte 23 ausgeführt sein. Die Verriegelungsplatte 17 oder 23 wird durch einen Antrieb 22, z.B. einen Elektromotor, über Keilriemen oder Zahnkranz (nicht dargestellt) angetrieben und gibt die Auswurföffnung 5 der unteren ortsfesten Platte 3 frei oder verschließt diese, sodass ein Ausschleusen der Hülse 21 verhindert wird. Die Verriegelungsplatte 17 weist eine nierenförmige Öffnung 18 auf, die sich über die Öffnungen 4 und 5 der unteren ortsfesten Platte 3 erstreckt. Die Verriegelungsplatte 23 schließt niveaugleich mit der unteren ortsfesten Platte 3 ab, sodass das Rotieren der beiden Rotoren 7 und 8 gewährleistet wird.

Die gesamte Rohrpoststation ist in der Praxis natürlich in einem Gehäuse (nicht dargestellt) eingebaut, das nur im Bereich der Öffnung 16 eine Öffnung (nicht dargestellt) aufweist, die durch eine Tür oder Abdeckung (nicht dargestellt) verschließbar sein kann.

Die dargestellte Rohrpoststation arbeitet wie folgt:

In der in Fig.1 dargestellten Durchfahrtsstellung werden die an die Öffnungen 2 und 4 angeschlossenen Rohre der Rohrpostanlage durch den Durchfahrtsrohrabschnitt 11 des ersten Rotors 7 miteinander verbunden. Eine Hülse 19 kann somit die Rohrpoststation in beiden Richtungen auf geradem Weg durchfahren. Eine Beladung des Einspeicherrohrabschnittes 15 des zweiten Rotors 8 mit einer Hülse 20 ist möglich.

Um eine Hülse 21 zu empfangen (siehe Fig.2), wird der erste Rotor 7 um 90° verdreht. Um ein zufälliges Verdrehen des Rotors 8 zu verhindern, ist dieser an der oberen ortsfesten Platte 1 oder an der unteren ortsfesten Platte 3, zum Beispiel durch einen Elektromagnet, fixiert. Nun befindet sich zwischen den Öffnungen 2 und 4 der Bremsrohrabschnitt 12 des ersten Rotors 7. Die Hülse 21 kann je nach Betriebsart der Rohrpoststation von oben oder von unten in die Rohrpoststation gelangen und wird dort im Bremsrohrabschnitt 12 gebremst. Im Bremsrohrabschnitt 12 ist, z.B. in der unteren Drehplatte 14, eine Antenne (nicht dargestellt) eingebaut. Diese Antenne liest die Daten des in der Hülse 21 eingebauten Chips und erkennt, ob diese Hülse 21 sofort ausgeschleust werden kann oder in der Rohrpoststation gespeichert werden muss. Ist die Hülse 21 nicht codiert, verbleibt die Verriegelungsplatte 17 in Grundstellung, d.h. die Öffnung 18 fluchtet mit den Öffnungen 4 und 5 der unteren ortsfesten Platte 3. Um die Hülse 21 aus der Rohrpoststation auszuschleusen, wird der erste Rotor 7 wieder in die Ausgangsstellung um 90° verdreht. Die Hülse 21 fällt nun durch die Öffnung 18 der Verriegelungsplatte 17 und durch die Öffnung 5 der unteren ortsfesten Platte 3 heraus und landet im Auffangbehälter (nicht dargestellt).

Während des gesamten Empfangvorganges wurde der zweite Rotor 8 nicht bewegt, sodass in den Rohrabschnitt 15 jederzeit eine abzusendende Hülse 20 eingelegt werden konnte. Der zweite Rotor 7 war die ganze Zeit fixiert.

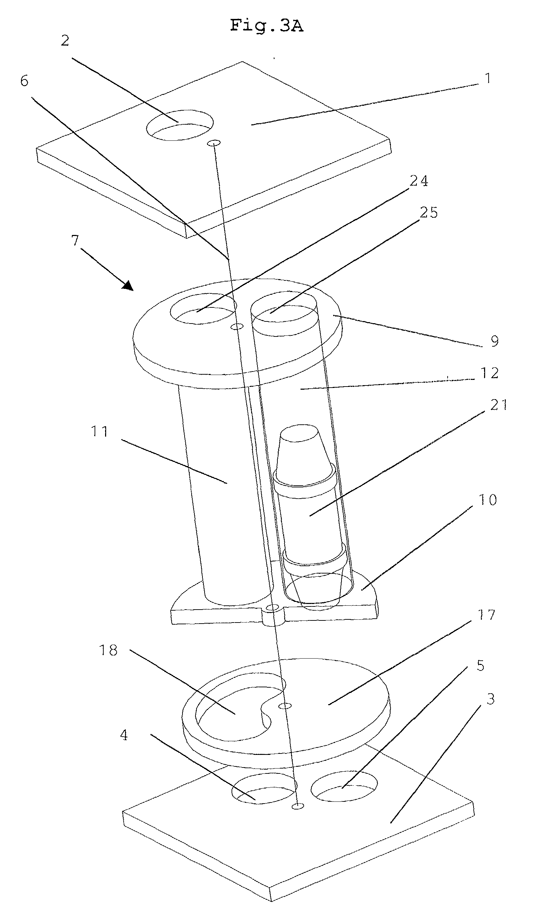

Wird die Hülse 21 als codiert erkannt, wird, wie in Fig.3A dargestellt, die Verriegelungsplatte 17 um 90° in die Schließstellung verdreht. Die nierenförmige Öffnung 18 gibt jetzt nur mehr die Öffnung 4 der unteren ortsfesten Platte 3 frei und verschließt die Auswurföffnung 5. Nun wird der erste Rotor 7 in die Ausgangsstellung um 90° verdreht und die Hülse 21 fällt auf die Verriegelungsplatte 17 herab und ist somit im Bremsrohrabschnitt 12 der Rohrpoststation gespeichert.

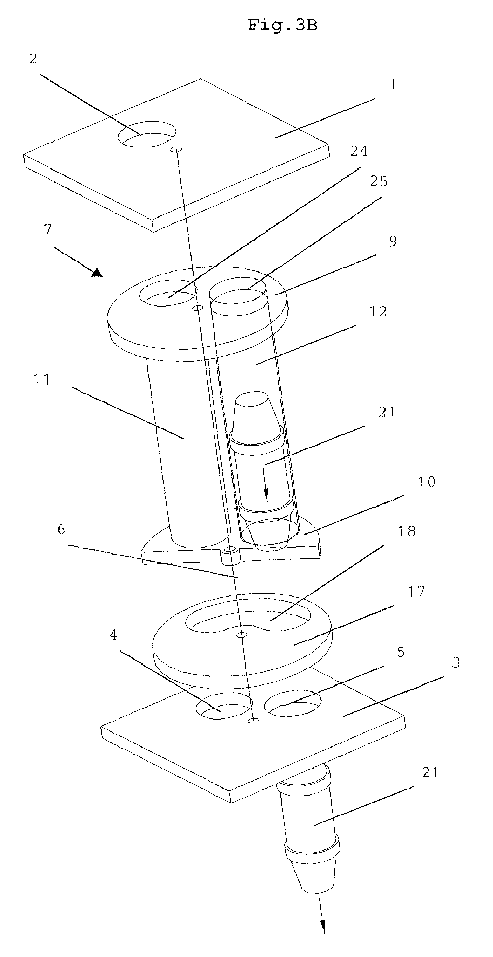

Soll nun die gespeicherte Hülse 21 ausgeschleust werden, wird, wie in Fig.3B dargestellt, die Verriegelungsplatte 17 um 90° in die Ausgangsstellung verdreht. Die Auswurföffnung 5 der unteren ortsfesten Platte 3 wird somit freigegeben und die Hülse 21 fällt in den Auffangbehälter (nicht dargestellt). Um dieses zu ermöglichen, muss die Pharmacyfunktion vom Empfänger durch eine eindeutige Identifizierung, z.B. Eingabe eines Zahlencodes über die Tastatur der Rohrpoststation (nicht dargestellt) oder dergleichen, aufgehoben werden. Somit ist sichergestellt, dass die Hülse 21 nur von einem bestimmten Empfänger oder einer bestimmten Empfängergruppe aus der Rohrpoststation entnommen werden kann. Wird die Hülse 21 innerhalb eines definierbaren Zeitraumes nicht aus der Rohrpoststation entnommen, wird diese automatisch an die Sendestation zurückgesandt. Für den Rücksendevorgang verbleibt die Verriegelungsplatte 17 in der Schließstellung, der erste Rotor 7 wird um 90° verdreht, sodass der Bremsrohrabschnitt 12 die Rohranschlüsse verbindet und die Hülse 21 gelangt somit wieder ins Rohrsystem. Nach dem Senden werden der erste Rotor 7 und die Verriegelungsplatte 17 wieder in die Grundstellung verdreht.

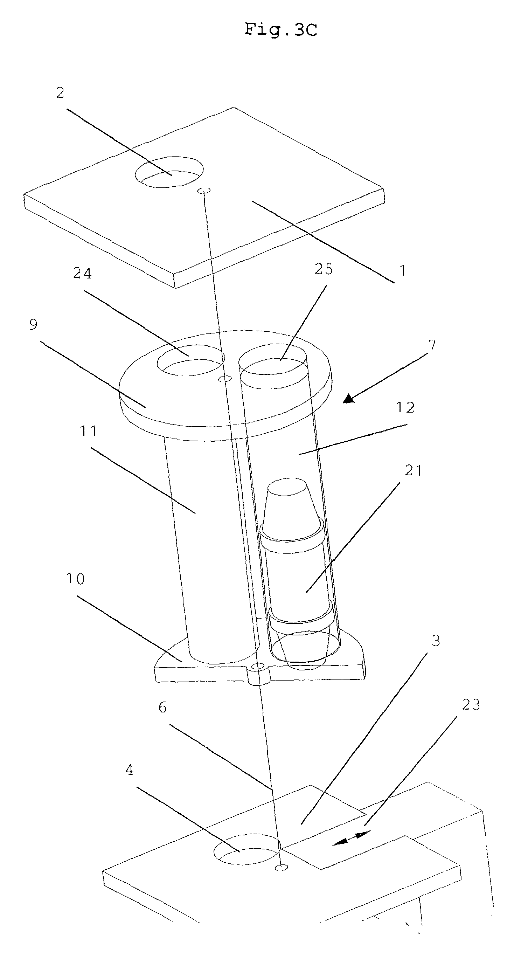

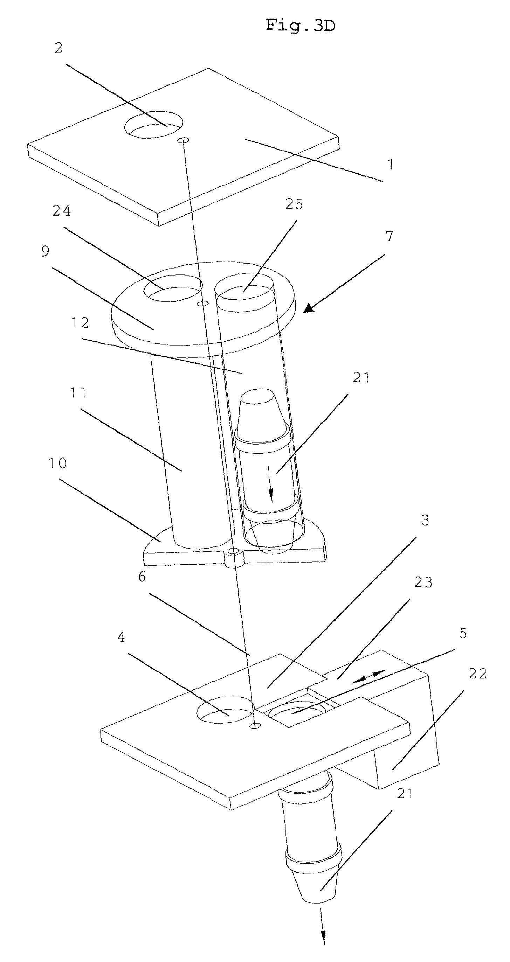

Die Pharmacyfunktion im Ausführungsbeispiel mit Schiebeplatte 23 wird in Fig.3C und Fig.3D dargestellt. Das Funktionsprinzip ist ident mit der als Drehplatte 17 ausgeführten Verriegelungsplatte. Hier wird die Schiebeplatte 23 über die Auswurföffnung 5 der unteren ortsfesten Platte 3 geschoben, um ein Ausschleusen der gespeicherten Hülse 21 zu verhindern. Um die Hülse 21 auszuschleusen, muss sich der Empfänger identifizieren. Die Schiebeplatte 23 wird vom Antrieb 22 von der Auswurföffnung 5 entfernt und die Hülse 21 fällt in den Auffangbehälter (nicht dargestellt).

Während des gesamten Speichervorganges wurde der zweite Rotor 8 nicht bewegt, sodass in den Rohrabschnitt 15 des zweiten Rotors 8 jederzeit eine Hülse 20 eingelegt werden konnte. Der zweite Rotor 8 war die ganze Zeit fixiert.

Soll nun die Hülse 20, die im Rohrabschnitt 15 des zweiten Rotors 8 eingelegt wurde, abgeschickt werden, muss der zweite Rotor 8 um 180° gedreht werden. Da bei diesen Ausführungsbeispielen der zweite Rotor 8 keinen eigenen Antrieb aufweist, werden zuerst der erste Rotor 7 und der zweite Rotor 8, z.B. durch einen Elektromagneten, miteinander verbunden. Dann drehen der erste Rotor 7 und der zweite Rotor 8 gemeinsam in die in Fig.4 dargestellte Sendestellung. Die Pharmaplatte 17 dreht sich um 90° mit, um die eingelegte Hülse 20 auf dem Niveau zu halten und um zu verhindern, dass die gespeicherte Hülse 21 ausgeschleust wird. Der Einspeicherrohrabschnitt 15 verbindet nun die an der oberen ortsfesten Platte 1 und an der unteren ortsfesten Platte 3 befestigten, Rohranschlüsse (nicht dargestellt) und die Hülse 20 kann nach oben oder unten, je nach Betriebsart, abgeschickt werden.

Die erfindungsgemäße Rohrpoststation kann sowohl manuell als auch durch Beschickungsautomaten bzw. Hülsenmagazine, die gleichzeitig mehrere Hülsen aufnehmen können, beschickt werden.

## Patentansprüche

1. Rohrpoststation mit einem zwischen zwei ortsfesten Platten (1, 3) angeordneten ersten Rotor (7), der zwei Rohrabschnitte, nämlich einen Durchfahrtsrohrabschnitt (11) und einen Bremsrohrabschnitt (12), aufweist, wobei die untere Platte (3) zwei Öffnungen (4, 5) aufweist, die an ein Fahrrohr und an ein Auswurfrohr anschließbar sind, wobei weiters eine bewegliche Verriegelungsplatte (17, 23) vorgesehen ist, die in mindestens zwei Positionen stellbar ist, wobei in einer Position eine Rohrposthülse (21) im Bremsrohrabschnitt (12) fixierbar ist, während die Öffnung (4) für das Fahrrohr freigegeben ist, **dadurch gekennzeichnet, dass** in einer anderen Position der Verriegelungsplatte (17, 23) beide Öffnungen (4, 5) der unteren Platte (3) freigegeben sind und dass die Verriegelungsplatte (17, 23) nur durch einen Schlüssel oder eine andere Identifikationseinrichtung in die andere Position stellbar ist.

2. Rohrpoststation nach Anspruch 1, **dadurch gekennzeichnet, dass**, ein zweiter Rotor (8) vorgesehen ist, der unabhängig vom ersten Rotor (7) drehbar ist und einen Rohrabschnitt (15) aufweist, der zur Frontbeladung eine seitliche Öffnung (16) aufweist.

3. Rohrpoststation nach Anspruch 1 oder 2, **dadurch gekennzeichnet, dass** die Verriegelungsplatte (17) drehbar ist und eine nierenförmige Öffnung (18) aufweist, die das Fahrrohr ständig, auch in Zwischenstellungen, freigibt.

4. Rohrpoststation nach Anspruch 1 oder 2, **dadurch gekennzeichnet, dass** die Verriegelungsplatte (23) linear verschiebbar ist.
